# EUROPEAN PATENT SPECIFICATION

(11) **EP 0 679 229 B1**
(45) Date of publication and mention of the grant of the patent: **09.10.1996**
(21) Application number: 94904591.8
(22) Date of filing: 14.01.1994
(51) Int. Cl.: F16C 3/10

(54) **A CRANKSHAFT FOR A TWOSTROKE INTERNAL COMBUSTION ENGINE AND A METHOD FOR ADJUSTING SAME**
KURBELWELLE FÜR EINE ZWEITAKT-BRENNKRAFTMASCHINE UND VERFAHREN ZUR EINSTELLUNG DERSELBEN
VILEBREQUIN POUR MOTEUR A COMBUSTION A DEUX TEMPS ET PROCEDE D'AJUSTAGE

(30) Priority: 15.01.1993 DK 42/93
(43) Date of publication of application: 02.11.1995
(73) Proprietor: MAN B&W DIESEL A/S, 2450 Copenhagen SV (DK)
(72) Inventor: WAHID, Ijaz, DK-2640 Hedehusene (DK)
(74) Representative: Indahl, Peter Jensen
(86) International application number: DK9400026
(87) International publication number: WO9416232

(56) References cited:
- CH-A- 567 194
- DE-C- 347 103
- GB-A- 1 095 370
- US-A- 5 207 120

## Description

The invention relates to a crankshaft for a two-stroke internal combustion engine, having throws comprising a crank pin with two crank arms each of which arms has a hole and a hollow chamfer positioned at the transition between the pin and the hole, which throws are joined together by means of main bearing pins with a central journal section and two cylindrical end sections which are positioned adjacent to the journal section and are inserted in the hole of the associated arm, each of said end sections having a centre axis which is radially displaced in relation to the centre axis of the journal section.

Such a crankshaft is known from Swiss Patent No. 567194. The hollow chamfer at the transition between the crank pin and the hole reduces the stress concentrations in this area to a permissible level. The displacement of the end sections away from the crank pin makes possible to design the central journal section with a larger diameter. In this patent the central journal section and the two end sections have equal diameters.

British patent No. 1 095 370 describes a crankshaft, the main bearing pins of which are joined together with the associated arm by means of a shrink or press connection. The cylindrical fitting surface of the joint is stepped in at least two sections having different diameters. The section of the fitting surface of the bearing pin which is closest to the journal surface of the crank pin has the smallest diameter. The invention of said patent is to the effect that the second section of the fitting surface is designed with a larger overmeasure than the smaller section, which increases the stresses in the material around the larger section. The enlarged diameter of the larger section involves an enlarged diameter of the adjacent journal section of the bearing pin, which may result in a shorter journal without reduction of the bearing area.

German Patent No. 347 103 discloses a crankshaft without a hollow chamfer in the transition zone which means that the crankshaft is not heavily loaded. The main bearing pins have cylindrical end sections, that are shink fitted into holes in the associated crank arms and have less diameter than the adjacent journal section.

The object of the present invention is to provide a crankshaft of short length and a large journal diameter without thereby causing a weakening of the arm, where the crankshaft can be heavily loaded and can transfer a large torque.

With this object in view, the crankshaft according to the invention is characterized in that the two end sections of the main bearing pin, in a manner known per se, have a smaller diameter than the adjacent journal section, that the cylindrical outer side of the end section and/or the inner side of the hole is/are provided with a friction-increasing material, and that the sum of the diameters of the crank pin journal and of the main bearing journal amounts to at least 108 per cent of the stroke length of the engine.

The invention renders it possible to produce a crankshaft of a very short length in relation to the engine power, as the jump in diameters between the journal and end sections of the main bearing pin permits a design of the journal section with a large diameter without the hole in the arm needing a larger diameter, that is, the arm maintains its strength, and the hollow chamfer is not affected either.

The radial displacement between the centre axes of the sections causes the end sections to be positioned eccentrically on the journal section. This may be utilized to position the hole in the arm at a larger distance from the centre axis of the crank pin, which in turn makes it possible either to reduce the stress level in the arm or to increase the diameter of the crank pin journal so that the shaft length may be further reduced.

If the increased journal diameter is utilized to increase the area of the journal so that the shaft is able to transmit larger forces and torques, the joint, the arms and the end sections inserted in the holes must be made capable of receiving a larger torque, which is conventionally done by increasing the diameter or length of the end sections. Instead, according to the invention, the cylindrical outer side of the end section and/or the inner side of the hole is/are provided with a friction-increasing material, which renders it possible for the joint to transmit larger torque.

The invention also relates to a method to adjust a crankshaft of the above type, characterized in that the stroke length of the engine is altered by rotating the main bearing pins about their centre axis in relation to the associated crank arms, whereby the centre distance between the main bearing journals and the crank pin journals is altered. With standardized components for the crankshaft, it is thus possible to produce shafts with a mutually different distance between the axes of the journals. An alteration of this centre axis distance results in the double alteration of the stroke length of the engine. The same engine type may thus be delivered with a stroke length which is carefully adapted to the intended use of the engine. With the invention, it is also possible to change the stroke length in a delivered engine by rotating the crank throws in relation to the main bearing pins by means of special tools, which gives great liberty in, for example, uprating an engine, if its operational conditions are permanently changed.

An embodiment of the invention will now be explained in further detail below with reference to the schematic drawings, in which
Figs. 1 and 2 show a side view and a cross-sectional view along the line II-II in Fig. 1, respectively, of part of a known crankshaft,
Figs. 3 and 4, on a slightly smaller scale, show corresponding views of a shaft according to the invention, and
Figs. 5-7, on an even smaller scale, show crosssectional views through the shaft according to the invention, to illustrate how the stroke length may be altered by rotating the journals in relation to each other.

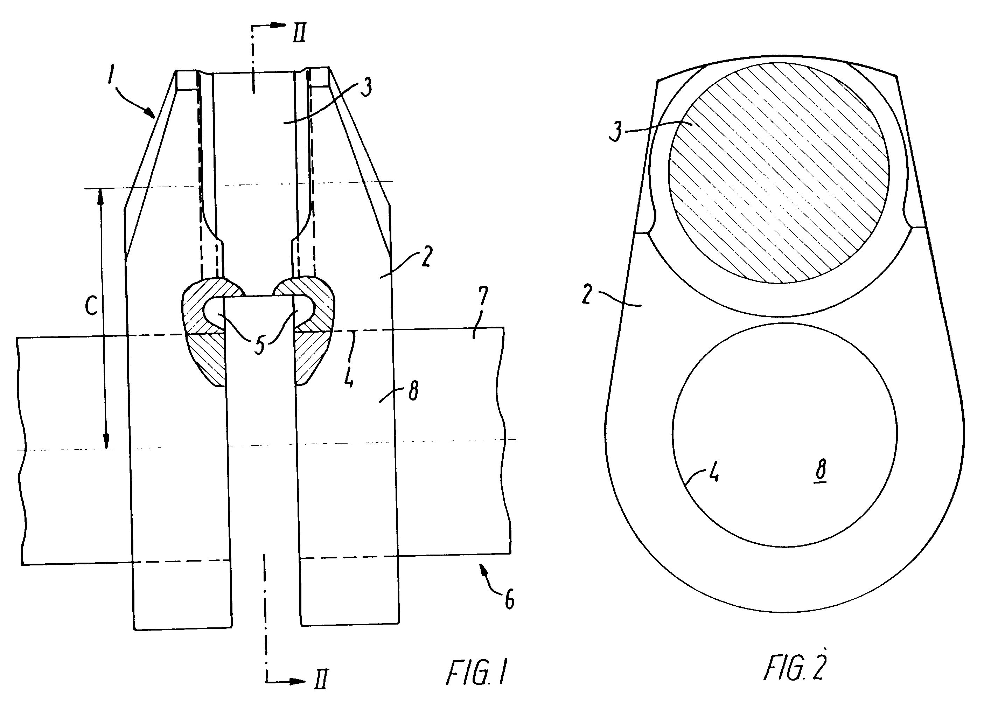

Fig. 1 shows a forged or cast throw 1 with two arms 2 made integrally with a crank pin 3. Each arm has an axially extending hole 4 positioned at such a radial distance from the crank pin that in the transitional area between the periphery of the pin and the edge of the hole 4 there is room for forming a hollow chamfer 5 in the arm. The shape of the hollow chamfer 5 is adapted in a known manner so that the stress concentrations in the arm become as small as possible. The individual throws are interconnected by main bearing pins 6 having a central journal section 7 which substantially smoothly passes into an end section 8 which with a suitable overmeasure has been shrunk into the cylindrical hole 4 in the arm 2 . In this known crankshaft, the holes 4 extend coaxially with the journal sections 7, and the stroke length of the engine is fixed to be double the centre distance c between the holes 4 and the crank pin 3.

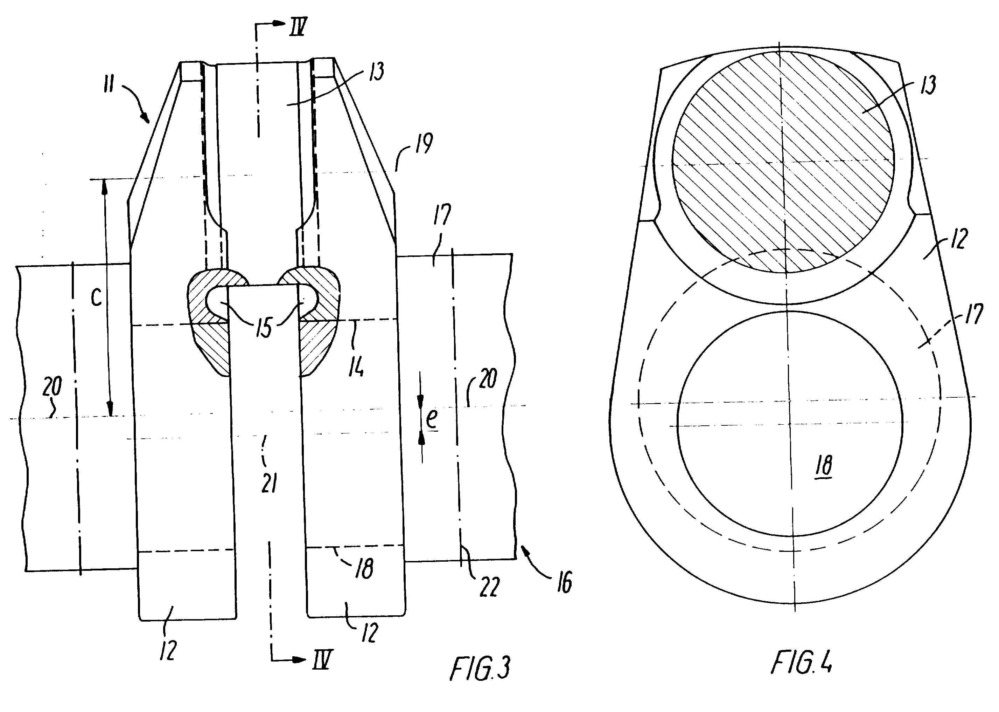

Figs. 3 and 4 illustrate a throw 11 of a shaft according to the invention, where the two arms 12 of the throw are forged or cast integrally with a crank pin journal 13. Each arm 12 is fastened to an end section 18 of a main bearing pin 16, which end section 18 is designed with an overmeasure in relation to a hole 14 in the arm. The bearing pin 16 has a central journal section 17 with a substantially larger diameter than the end section 18. As best seen from Fig. 4, where the periphery of the journal section 17 is shown by a dashed line, the end section 18 is positioned eccentrically in relation to the journal section 17. This has the effect that the distance between the centre axis 19 of the crank pin journal and the centre axis 20 of the main bearing journal is different from the distance between the centre axis 19 and the centre axis 21 of the hole 14. The main bearing pin 16 is symmetrical about a middle plane 22 at right angles to the centre axis 20.

In the radial direction, the crank pin journal 13 and the main bearing journal 17 are mutually overlapping, but as a result of the eccentric position of the end section 18, there is still such a minimum distance between the crank pin journal 13 and the section 18 that there is room to shape the hollow chamfers 15 in the usual manner.

With the mounting of the main bearing pin in the arm 12 shown in Fig. 3, the eccentric journalling of the end section 18 on the journal section 17 has the effect that the hole 14 is a distance e, corresponding to the eccentricity of the end section, further away from the centre axis 19 of the crank pin journal than the hole would be in a shaft with the same centre distance c and with an end section extending coaxially with the adjacent journal section. This displacement of the hole 14 in a direction away from the crank pin journal is utilized to increase the diameter of the crank pin journal in the embodiment of the shaft shown.

It may be seen from Figs. 3 and 4 that the crankshaft has a very large journal diameter in relation to the distance c between the centre axes of the journals, as the diameter of the main bearing is dₘ = 1.33 c, while the diameter of the crank pin journal is d_{c} = 0.95 c.

As there has to be room for the hollow chamfer 5, the sum of the diameters of the main bearing journal and the crank pin journal in known shafts is less than the stroke length of the engine multiplied by 0.9, while the sum of the diameters of the two journals in the shaft according to the invention is at least 8 per cent, and suitably at least 12 per cent, larger than the stroke length of the engine. Depending on the engine type chosen, the total diameter of the two journals may be distributed evenly on both journals or with an overweight to one or the other journal. The large diameters of the journals render it possible to transmit a large power in relation to the length of the shaft, which makes the shaft particularly applicable as the crankshaft of a V engine, and especially a large two-stroke V engine of the crosshead type. Such an engine may have two pistons connected to the same crank pin journal, which results in a large load on both this journal and the main bearing journal.

One or both of the associated surfaces on the inner side of the hole 14 and the outer side of the end section 18 may be provided with a friction-increasing material, such as a coating of nickel and/or particles substantially harder than the basic material of the crankshaft arm and the journal element, such as carborundum powder (SiC). The friction-increasing material improves the grip between the end section and the arm so that the joint may transmit larger moments.

It will now be explained how the stroke length of the engine depends on the mutual angular position between the main bearing pins and the associated arms in which the end sections of the pin are inserted. First looking at Fig. 3 it is clear that all the centre axes 20 of the bearing pins are coaxial and coincide with the centre axis of the main bearings. The individual throws 11 are arranged in the usual manner in mutual angular positions depending on the number of cylinders of the engine.

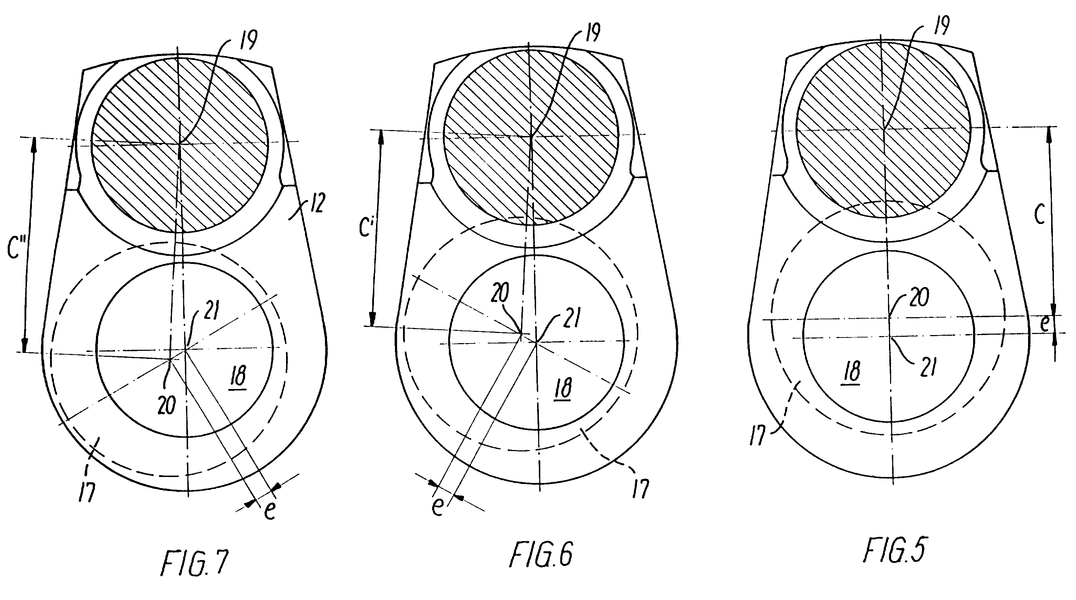

Figs. 5-7 show the effect of rotating the throw 11 in relation to the centre axes of the end sections 18 of the associated bearing pins 16. In Fig. 5, the arm 12 is fastened in relation to the bearing pin 16 so that the eccentric distance e of the end section is positioned on the connecting line between the centre axes 19 and 20 of the journals, and so that the distance c between these axes and thus also the stroke length of the engine is minimal.

In comparison with Fig. 5, it can be seen that in Figs. 6 and 7, the arm 12 has been rotated about 60° and about 120°, respectively, in relation to the bearing pin 16, which, in Fig. 6, results in a distance c' between the centre axes 19 and 20 which is larger than the distance c i Fig. 5, but smaller than the distance c" in Fig. 7. The distance c may be altered by up to double the eccentric distance e, which again means that the stroke length of the engine may be varied by up to e multiplied by 4. In the embodiment shown in the drawings, the stroke length of the engine may be varied by up to 18.3 per cent, which, given the same engine components, results in considerable liberty in modifying the engine parameters.

## Claims

1. A crankshaft for a two-stroke internal combustion engine, having throws (11) comprising a crank pin with two crank arms (12) each of which arm has a hole (14) and a hollow chamfer (15) positioned at the transition between the pin and the hole, which throws are joined together by means of main bearing pins (16) with a central journal section (17) and two cylindrical end sections (18) which are positioned adjacent to the journal section and are inserted in the hole (14) of the associated arm, each of said end sections (18) having a centre axis which is radially displaced in relation to the centre axis (20) of the journal section, **characterized** in that the two end sections (18) of the main bearing pin, in a manner known per se, have a smaller diameter than the adjacent journal section (17), that the cylindrical outer side of the end section (18) and/or the inner side of the hole (14) is/are provided with a friction-increasing material, and that the sum of the diameters of the crank pin journal (13) and of the main bearing journal (17) amounts to at least 108 per cent of the stroke length of the engine.

2. A crankshaft according to claim 1, **characterized** in that said sum of diameters amounts to at least 112 per cent of the stroke length of the engine.

3. A crankshaft according to any one of claims 1 or 2, **characterized** in that the shaft is intended for use in a V engine, preferably a large two-stroke crosshead engine.

4. A method to adjust a crankshaft according to any one of claims 1-3, **characterized** in that the stroke length of the engine is altered by rotating the main bearing pins (16) about their centre axis (20) in relation to the associated crank arms (12), whereby the centre distance (c, c', c") between the main bearing journals and the crank pin journals is altered.

## Patentansprüche

1. Kurbelwelle für eine Zweitakt-Brennkraftmaschine, mit Kröpfungen (11) umfassend einen Kurbelzapfen mit zwei Kurbelwangen (12), von denen jede mit einem Loch und einer beim Übergang zwischen dem Zapfen und dem Loch angeordneten Hohlkehle (15) versehen ist, welche Kröpfungen mittels Hauptlagerzapfen (16) mit einem zentralen Laufflächenabschnitt (17) und zwei an den Laufflächenabschnitt angrenzenden und in das Loch (14) der zugehörigen Wange eingsetzten zylindrischen Endabschnitten (18) gesammelt sind, wobei jeder der Endabschnitte (18) eine Mittelachse aufweist, die im Verhältnis zur Mittelachse (20) des Laufflächenabschnittes radial verschoben ist, dadurch **gekennzeichnet** , dass die zwei Endabschnitte (18) des Hauptlagerzapfens auf an und für sich bekannte Weise einen kleineren Durchmesser aufweisen als der angrenzende Laufflächenabschnitt (17), dass die zylindrische Aussenseite des Endabschnittes (18) und/oder die Innenseite des Loches (14) mit einem friktionserhöhenden Material versehen ist, und dass die Summe der Durchmesser der Kurbelzapfenlauffläche (13) und der Hauptlagerzapfenlauffläche (17) mindestens 108% der Hublänge des Motors beträgt.

2. Kurbelwelle nach Anspruch 1, dadurch **gekennzeichnet**, dass die Summe der Durchmesser mindestens 112% der Hublänge des Motors beträgt.

3. Kurbelwelle nach Anspruch 1 oder 2, dadurch **gekennzeichnet**, dass die Welle zur Verwendung in einem V-Motor, vorzugsweise einem grossen ZweitaktKreuzkopfmotor vorgesehen ist.

4. Verfahren zum Einstellen einer Kurbelwelle nach einem der Ansprüche 1-3, dadurch **gekennzeichnet**, dass die Hublänge des Motors durch Drehen der Hauptlagerzapfen (16) um ihre Mittelachse (20) im Verhältnis zu den zugehörigen Kurbelwangen (12) geändert wird, wodurch der Mittelabstand (c, c', c") zwischen den Hauptlagerzapfenlaufflächen und den Kurbelzapfenlaufflächen geändert wird.

## Revendications

1. Vilebrequin pour moteur à combustion interne deux temps, présentant des coudes (11) comportant un maneton avec deux bras de vilebrequin (12), chacun de ces bras présentant un perçage (14) et un chanfrein creux (15) situé à la transition entre le maneton et le perçage, lesdits coudes étant réunis à l'aide de tourillons principaux (16) avec une section centrale de rotation (17) et deux sections terminales cylindriques (18) qui sont en position adjacente à la section de rotation et placées dans le perçage (14) du bras associé, chacune desdites sections terminales (18) ayant un axe central qui est radialement décalé par rapport à l'axe central (20) de la section de rotation, **caractérisé** en ce que les deux sections terminales (18) du tourillon principal, de manière en soi connue, présentent un diamètre inférieur à celui de la section adjacente de rotation (17), en ce que la surface cylindrique externe de la section terminale (18) et/ou la face interne du perçage (14) est/sont pourvue(s) d'un matériau d'augmentation de friction, et en ce que la somme des diamètres du maneton (13) et de la section centrale de rotation (17) se monte à au moins 108 pour-cent de la longueur de course de piston du moteur.

2. Vilebrequin selon la revendication 1, **caractérisé** en ce que ladite somme des diamètres se monte à au moins 112 pour-cent de la longueur de course de piston du moteur.

3. Vilebrequin selon l'une quelconque des revendications 1 ou 2, **caractérisé** en ce que le vilebrequin est prévu pour utilisation dans un moteur en V, de préférence un large moteur deux temps du type tête croisée.

4. Procédé d'ajustage d'un vilebrequin selon l'une quelconque des revendications 1 à 3, **caractérisé** en ce que la longueur de course du moteur est modifiée par rotation des tourillons principaux (16) autour de leur axe central (20) par rapport aux bras de vilebrequin associés (12), la distance (c, c' c") de centre à centre entre les sections centrales de rotation et les manetons se trouvant ainsi modifiée.
